# EUROPÄISCHE PATENTANMELDUNG

(11) **EP 4 390 700 A1**
(43) Veröffentlichungstag der Anmeldung: **26.06.2024**
(21) Anmeldenummer: 23195862.0
(22) Anmeldetag: 07.09.2023
(51) Int. Cl.: G06F 11/263

(54) **COMPUTER-IMPLEMENTIERTES VERFAHREN ZUM BESTIMMEN ALGORITHMUSVERSIONS-KOMPATIBLER TEST- UND/ODER SIMULATIONSDATEN UND ENTSPRECHENDES SYSTEM**

(30) Priorität: 20.12.2022 DE 102022134027
(71) Anmelder: dSPACE GmbH, 33102 Paderborn (DE)
(72) Erfinder: Misch, Thomas, 33102 Paderborn (DE); Werth, Matthias, 33102 Paderborn (DE); Stichling, Dirk, 33102 Paderborn (DE); Miller, Eduard, 33102 Paderborn (DE); Sommer, Kevin, 33102 Paderborn (DE)

(57) **Zusammenfassung**

Die Erfindung betrifft ein computerimplementiertes Verfahren und System zum Bestimmen von, für eine fehlerfreie Ausführung eines virtuellen Tests und/oder einer Simulation einer Fahrzeugvorrichtung und/oder einer Fahrzeugfunktion erforderlichen, zu einer mit einer spezifischen Version eines den virtuellen Test und/oder die Simulation ausführenden Algorithmus (A) erstellten, insbesondere Test- und/oder Simulations-, Konfiguration kompatiblen Test- und/oder Simulationsdaten (24a, 24b, 24c, 24d; 124a, 124b, 124c, 124d), umfassend ein Bestimmen (S2) eines, eine Kompatibilitätsanforderung (14a, 14b) der ersten Konfiguration (10) und/oder der zweiten Konfiguration (12) unterstützenden, Datensatzes (D1, D2) von Test- und/oder Simulationsdaten (24a, 24b, 24c, 24d; 124a, 124b, 124c, 124d), und ein Ausgeben (S3) des bestimmten, die Kompatibilitätsanforderung (14a, 14b) der ersten Konfiguration (10) und/oder der zweiten Konfiguration (12) unterstützenden Datensatzes (D1, D2) von Test- und/oder Simulationsdaten (24a, 24b, 24c, 24d; 124a, 124b, 124c, 124d).

## Beschreibung

Die vorliegende Erfindung betrifft ein computerimplementiertes Verfahren zum Bestimmen von, für eine fehlerfreie Ausführung eines virtuellen Tests und/oder einer Simulation einer Fahrzeugvorrichtung und/oder einer Fahrzeugfunktion erforderlichen, zu einer mit einer spezifischen Version eines den virtuellen Test und/oder die Simulation ausführenden Algorithmus erstellten, insbesondere Test- und/oder Simulations-, Konfiguration kompatiblen Test- und/oder Simulationsdaten.

Die Erfindung betrifft des Weiteren ein computerimplementiertes Verfahren zum Ausführen eines virtuellen Tests und/oder einer Simulation einer Fahrzeugvorrichtung und/oder einer Fahrzeugfunktion.

Die Erfindung betrifft ferner ein System zum Bestimmen von, für eine fehlerfreie Ausführung eines virtuellen Tests und/oder einer Simulation einer Fahrzeugvorrichtung und/oder einer Fahrzeugfunktion erforderlichen, zu einer mit einer spezifischen Version eines den virtuellen Test und/oder die Simulation ausführenden Algorithmus erstellten, insbesondere Test- und/oder Simulations-, Konfiguration kompatiblen Test- und/oder Simulationsdaten.

Des Weiteren betrifft die Erfindung ein Computerprogramm.

### Stand der Technik

Fahrzeugvorrichtungen wie beispielsweise Steuergeräte und/oder einer Fahrzeugfunktionen wie z.B. Fahrassistenzfunktionen können mithilfe diverser Überprüfungsmethoden verifiziert bzw. validiert werden. Dabei können insbesondere virtuelle Tests verwendet werden.

Zur Erstellung virtueller Tests und/oder Simulationen sind dabei beispielsweise aus Testfahrten und/oder anderweitig gewonnene Sensordaten erforderlich.

Für eine Testausführung werden neben dem Test selbst unterschiedliche Systemelemente benötigt. Diese können beispielsweise ein zu testendes System, eine Testumgebung sowie ein Testsystem umfassen.

Das zu testende System beschreibt dabei ein zu testendes Element, z.B. eine ECU-Software. Die Testumgebung beschreibt die Umgebung, in der das zu testende System getestet wird und das Testsystem beschreibt das System auf dem der Test durchgeführt wird. Beispiele für das Testsystem sind HIL- oder SIL-Systeme, welche z.B. auf einem Ausführungsknoten in der Cloud ausführbar sind.

Da es in der Regel unterschiedliche bzw. mehrere zu testende Systeme, Testumgebungen und Testsysteme gibt, kann es zu der Situation kommen, dass nicht jede Kombination erwünscht oder gar möglich ist.

Im Falle einer Fehlkonfiguration eines Tests, bei welchem beispielsweise eine inkompatible Kombination aus zu testendem System, Testumgebung und Testsystem verwendet wird, kann es in der Folge zu einer fehlerhaften Testausführung in Verbindung mit einem Testabbruch kommen. Hierdurch werden Rechenzeit und/oder Rechenressourcen unnötigerweise gebunden sowie vermeidbare Kosten verursacht.

Herkömmlicherweise unterstützt ein den virtuellen Test und/oder die Simulation ausführender Algorithmus die Ausführung von Simulationen und Testjobs nur für genau eine konkrete Version des Algorithmus bzw. eine konkrete Release einer Software-Applikation.

Demzufolge besteht ein Bedarf, bestehende Verfahren zur Konfiguration einer Ausführung eines virtuellen Tests und/oder einer Simulation einer Fahrzeugvorrichtung und/oder einer Fahrzeugfunktion dahingehend zu verbessern, dass der die Simulation ausführende Algorithmus in der Lage sein soll, Test- und/oder Simulationsdaten zu unterstützen, welche mit unterschiedlichen Versionen des die Simulation ausführenden Algorithmus erstellt worden sind.

### Offenbarung der Erfindung

Die Aufgabe wird erfindungsgemäß durch ein computerimplementiertes Verfahren zum Bestimmen von, für eine fehlerfreie Ausführung eines virtuellen Tests und/oder einer Simulation einer Fahrzeugvorrichtung und/oder einer Fahrzeugfunktion erforderlichen, zu einer mit einer spezifischen Version eines den virtuellen Test und/oder die Simulation ausführenden Algorithmus erstellten, insbesondere Test- und/oder Simulations-, Konfiguration kompatiblen Test- und/oder Simulationsdaten mit den Merkmalen des Patentanspruchs 1 gelöst.

Des Weiteren wird die Aufgabe erfindungsgemäß durch ein computer-implementiertes Verfahren zum Ausführen eines virtuellen Tests und/oder einer Simulation einer Fahrzeugvorrichtung und/oder einer Fahrzeugfunktion mit den Merkmalen des Patentanspruchs 12 gelöst.

Ferner wird die Aufgabe erfindungsgemäß durch ein System zum Bestimmen von, für eine fehlerfreie Ausführung eines virtuellen Tests und/oder einer Simulation einer Fahrzeugvorrichtung und/oder einer Fahrzeugfunktion erforderlichen, zu einer mit einer spezifischen Version eines den virtuellen Test und/oder die Simulation ausführenden Algorithmus erstellten, insbesondere Test- und/oder Simulations-, Konfiguration kompatiblen Test- und/oder Simulationsdaten mit den Merkmalen des Patentanspruchs 14 gelöst.

Darüber hinaus wird die Aufgabe erfindungsgemäß durch ein Computerprogramm mit den Merkmalen des Patentanspruchs 15 gelöst.

Die Erfindung betrifft ein computerimplementiertes Verfahren zum Bestimmen von, für eine fehlerfreie Ausführung eines virtuellen Tests und/oder einer Simulation einer Fahrzeugvorrichtung und/oder einer Fahrzeugfunktion erforderlichen, zu einer mit einer spezifischen Version eines den virtuellen Test und/oder die Simulation ausführenden Algorithmus erstellten, insbesondere Test- und/oder Simulations-, Konfiguration kompatiblen Test- und/oder Simulationsdaten.

Das Verfahren umfasst ein Bereitstellen einer vorerfassten Selektion oder Selektieren einer, mit einer ersten Version eines den virtuellen Test und/oder die Simulation ausführenden Algorithmus erstellten ersten, insbesondere Test- und/oder Simulations-, Konfiguration und einer mit einer zweiten Version eines den virtuellen Test und/oder die Simulation ausführenden Algorithmus erstellten zweiten, insbesondere Test- und/oder Simulations-, Konfiguration.

Unter einer vorerfassten Selektion wird dabei verstanden, dass ein Nutzer sämtliche zur Ausführung des virtuellen Tests und/oder der Simulation der Fahrzeugvorrichtung und/oder der Fahrzeugfunktion erforderlichen Systemelemente bzw. Konfigurationsdaten vorab selektiert und diese Selektion sodann als Datensatz bereitgestellt wird.

Des Weiteren umfasst das Verfahren ein Bestimmen eines, eine Kompatibilitätsanforderung der ersten Konfiguration und/oder der zweiten Konfiguration unterstützenden, Datensatzes von Test- und/oder Simulationsdaten.

Das Verfahren umfasst darüber hinaus ein Ausgeben des bestimmten, die Kompatibilitätsanforderung der ersten Konfiguration und/oder der zweiten Konfiguration unterstützenden Datensatzes von Test- und/oder Simulationsdaten.

Die Erfindung betrifft ferner ein System zum Bestimmen von, für eine fehlerfreie Ausführung eines virtuellen Tests und/oder einer Simulation einer Fahrzeugvorrichtung und/oder einer Fahrzeugfunktion erforderlichen, zu einer mit einer spezifischen Version eines den virtuellen Test und/oder die Simulation ausführenden Algorithmus erstellten, insbesondere Test- und/oder Simulations-, Konfiguration kompatiblen Test- und/oder Simulationsdaten.

Das System umfasst eine Bereitstellungseinheit, welche dazu eingerichtet ist, eine vorerfasste Selektion oder ein Selektieren einer, mit einer ersten Version eines den virtuellen Test und/oder die Simulation ausführenden Algorithmus erstellten ersten, insbesondere Test- und/oder Simulations-, Konfiguration und einer mit einer zweiten Version eines den virtuellen Test und/oder die Simulation ausführenden Algorithmus erstellten zweiten, insbesondere Test- und/oder Simulations-, Konfiguration bereitzustellen.

Des Weiteren umfasst das System eine Berechnungseinheit, welche dazu eingerichtet ist, einen, eine Kompatibilitätsanforderung der ersten Konfiguration und/oder der zweiten Konfiguration unterstützenden, Datensatz von Test- und/oder Simulationsdaten zu bestimmen.

Das System umfasst ferner eine Ausgabeeinheit, welche dazu eingerichtet ist, den bestimmten, die Kompatibilitätsanforderung der ersten Konfiguration und/oder der zweiten Konfiguration unterstützenden Datensatz von Test- und/oder Simulationsdaten auszugeben.

Das computer-implementierte Verfahren zum Ausführen des virtuellen Tests und/oder der Simulation der Fahrzeugvorrichtung und/oder der Fahrzeugfunktion kann beispielsweise auf einem Ausführungsknoten in der Cloud ausgeführt werden.

Die durch den virtuellen Test validierte und/oder durch das Simulationsverfahren simulierte Fahrzeugfunktion kann beispielsweise auf einem Steuergerät des Kraftfahrzeugs ausgeführt werden.

Die Erfindung betrifft überdies ein Computerprogramm mit Programmcode, um das erfindungsgemäße Verfahren durchzuführen, wenn das Computerprogramm auf einem Computer ausgeführt wird.

Der Fachmann versteht unter einem Algorithmus eine aus endlich vielen, definierten Einzelschritten bestehende Handlungsvorschrift. Damit kann ein Algorithmus in einer formalisierten Programmiersprache abgefasst und in kompilierter Form als maschinenlesbar ausführbares Computerprogramm implementiert werden.

Der Fachmann versteht unter einer Testkonfiguration konfigurierbare Parameter eines Tests, wie beispielsweise eine Fahrbahnbreite, eine Anzahl von Verkehrsteilnehmern, eine Art der Verkehrsteilnehmer und/oder eine Art zu testender Manöver.

Unter einer Simulationskonfiguration wird verstanden, welche Simulationsumgebung genutzt wird, welches Tooling, ob die Simulation echtzeitfähig oder nicht echtzeitfähig ist, etc. Die Simulationskonfiguration bezieht sich daher nicht auf einen spezifischen Testfall, sondern auf eine Metaebene, d.h. die Simulation selbst.

Eine Idee der Erfindung ist es, durch eine Mehrzahl unterschiedlicher Versionen eines den virtuellen Test und/oder die Simulation ausführenden Algorithmus erstellte Datensätze von Test- und/oder Simulationsdaten unter Verwendung einer einzelnen Instanz des den virtuellen Test ausführenden Algorithmus ausführen zu können.

Somit kann in vorteilhafter Weise ermöglicht werden, dass bestehende Datensätze von Test- und/oder Simulationsdaten mit einer aktuellen Version des die Simulation ausführenden Algorithmus verwendet werden können.

Dadurch kann ein Migrationsaufwand zur Sicherstellung einer Kompatibilität von mit unterschiedlichen Versionen des die Simulation ausführenden Algorithmus bzw. Software-Applikation vermieden und eine einfache Handhabbarkeit bzw. Integration vorhandener Datensätze in die Test- und/oder Simulationsumgebung realisiert werden. Weitere Ausführungsformen der vorliegenden Erfindung sind Gegenstand der weiteren Unteransprüche und der nachfolgenden Beschreibung unter Bezugnahme auf die Figuren.

Gemäß einer bevorzugten Weiterbildung der Erfindung ist vorgesehen, dass der virtuelle Test der Fahrzeugvorrichtung und/oder der Fahrzeugfunktion ein zu testendes System, eine Testumgebung, eine Testart, ein Testszenario, ein Testfahrzeug, ein Testfall, eine mit dem zu testenden System verbundene Sensorik und/oder eine Testsuite umfasst, welche von der ersten Konfiguration und/oder der zweiten Konfiguration unabhängig sind, und wobei der virtuelle Test der Fahrzeugvorrichtung und/oder der Fahrzeugfunktion Testdaten des zu testenden Systems, der Testumgebung, der Testart, des Testszenarios, des Testfahrzeugs, des Testfalls und der mit dem zu testenden System verbundenen Sensorik umfasst, welche von der ersten Konfiguration und/oder der zweiten Konfiguration abhängig sind.

Somit können die jeweiligen Testdaten in vorteilhafter Weise einer spezifischen Version des den virtuellen Test ausführenden Algorithmus zugeordnet werden.

Gemäß einer weiteren bevorzugten Weiterbildung der Erfindung ist vorgesehen, dass die Simulation der Fahrzeugvorrichtung und/oder der Fahrzeugfunktion ein zu simulierendes System, eine Simulationsumgebung, eine Simulationsart, ein Simulationsszenario, ein Simulationsfahrzeug, eine mit dem zu simulierenden System verbundene Sensorik und eine Simulationssuite umfasst, welche unabhängig von der ersten Konfiguration und/oder der zweiten Konfiguration sind, und wobei die Simulation der Fahrzeugvorrichtung und/oder der Fahrzeugfunktion Simulationsdaten des zu simulierenden Systems, der Simulationsumgebung, der Simulationsart, des Simulationsszenarios, des Simulationsfahrzeugs und der mit dem zu simulierenden System verbundenen Sensorik umfasst, welche von der ersten Konfiguration und/oder der zweiten Konfiguration abhängig sind.

Somit können die jeweiligen Simulationsdaten in vorteilhafter Weise einer spezifischen Version des die Simulation ausführenden Algorithmus zugeordnet werden.

Gemäß einer weiteren bevorzugten Weiterbildung der Erfindung ist vorgesehen, dass in einem Datenspeicher gespeicherte Metadaten kategorisieren, für welche zu testende Systeme, Testumgebungen, Testarten, Testszenarien, Testfahrzeuge, Testfälle, mit dem zu testenden System verbundene Sensorik und/oder Testsuiten Testdaten vorliegen.

Dies ermöglicht einen vereinfachten Zugriff auf die jeweiligen Daten bei der Konfiguration des virtuellen Tests und/oder der Simulation.

Gemäß einer weiteren bevorzugten Weiterbildung der Erfindung ist vorgesehen, dass die Kompatibilitätsanforderung der ersten Konfiguration unter Verwendung der ersten Version des den virtuellen Test ausführenden Algorithmus erstellte Test- und/oder Simulationsdaten sind, und wobei die Kompatibilitätsanforderung der zweiten Konfiguration unter Verwendung der zweiten Version des den virtuellen Test ausführenden Algorithmus erstellte Test- und/oder Simulationsdaten sind.

Somit kann eine Kompatibilität der Testdaten mit der entsprechenden Version des den virtuellen Test ausführenden Algorithmus gewährleistet werden.

Gemäß einer weiteren bevorzugten Weiterbildung der Erfindung ist vorgesehen, dass die Kompatibilitätsanforderung der ersten Konfiguration zur Konfiguration kompatible erste Test- und/oder Simulationsdaten sind, und wobei die Kompatibilitätsanforderung der zweiten Konfiguration zur zweiten Konfiguration kompatible zweite Test- und/oder Simulationsdaten sind.

Die jeweiligen Test- und/oder Simulationsdaten können sodann von dem den virtuellen Test ausführenden Algorithmus ausgeführt werden.

Gemäß einer weiteren bevorzugten Weiterbildung der Erfindung ist vorgesehen, dass die ersten Test- und/oder Simulationsdaten mit einem die erste Version des den virtuellen Test ausführenden Algorithmus bezeichnenden ersten Kompatibilitätsattribut annotiert sind, und wobei die zweiten Test- und/oder Simulationsdaten mit einem die zweite Version des den virtuellen Test ausführenden Algorithmus bezeichnenden zweiten Kompatibilitätsattribut annotiert sind.

Die Annotierung der Test- und/oder Simulationsdaten ermöglicht dabei eine einfachere Zuordbarkeit von Test- und/oder Simulationsdaten zur jeweils relevanten Version des den virtuellen Test und/oder die Simulation ausführenden Algorithmus.

Gemäß einer weiteren bevorzugten Weiterbildung der Erfindung ist vorgesehen, dass der virtuelle Test ein Model-in-the-Loop-Test, ein Software-in-the-Loop-Test, ein Processor-in-the-Loop-Test oder ein Hardware-in-the-Loop-Test der Fahrzeugvorrichtung und/oder der Fahrzeugfunktion ist, und wobei die Simulation ein Verhalten der Fahrzeugvorrichtung und/oder der Fahrzeugfunktion simuliert.

Der virtuelle Test weist somit ein diverses Anwendungsspektrum auf. Bei der Fahrzeugvorrichtung kann es sich z.B. um ein Steuergerät einer beliebigen Fahrzeugkomponente wie beispielsweise einem Bremssystem, einem Lenksystem, einem Infotainmentsystem, einem Kommunikationssystem und/oder einem Fahrassistenzsystem handeln. Bei der Fahrzeugfunktion kann es sich analog hierzu um eine entsprechende Funktion handeln, welche auf dem korrespondierenden, oben genannten Steuergerät ausgeführt wird.

Gemäß einer weiteren bevorzugten Weiterbildung der Erfindung ist vorgesehen, dass die erste Konfiguration und/oder die zweite Konfiguration eine Testsuite und eine Testumgebung aufweisen, welchen der die Kompatibilitätsanforderung unterstützende Datensatz von Test- und/oder Simulationsdaten zugewiesen wird. Damit kann der Testsuite und der Testumgebung ein Datensatz zugeordnet werden.

Gemäß einer weiteren bevorzugten Weiterbildung der Erfindung ist vorgesehen, dass zum Ausführen einer Testart eine Testsuite und ein Testfall selektiert werden, wobei der Testart jeweilige Testdaten zugeordnet sind. Damit kann der jeweilige Testfall unter Verwendung versionskompatibler Daten ausgeführt werden.

Gemäß einer weiteren bevorzugten Weiterbildung der Erfindung ist vorgesehen, dass die Testart des virtuellen Tests der Fahrzeugvorrichtung und/oder der Fahrzeugfunktion einen Szenario-basierten Test, einen Daten-Wiedergabe-Test und/oder einen Schritt-basierten Test umfasst. Der virtuelle Test kann somit eine Mehrzahl unterschiedlicher Testarten umfassen, welche je nach Aufgabenstellung verwendet werden können.

Gemäß einer weiteren bevorzugten Weiterbildung der Erfindung ist vorgesehen, dass die, die Kompatibilitätsanforderung der ersten Testkonfiguration unterstützenden Test- und/oder Simulationsdaten und die, die Kompatibilitätsanforderung der zweiten Testkonfiguration unterstützenden Test- und/oder Simulationsdaten durch eine selbe Instanz des den virtuellen Test ausführenden Algorithmus ausgeführt werden.

Dies weist den Vorteil auf, dass sämtliche vorhandenen Test- und/oder Simulationsdaten durch eine einzelne Instanz des den virtuellen Test ausführenden Algorithmus ausgeführt werden können.

Die hierin beschriebenen Merkmale des computerimplementierten Verfahrens zum Bestimmen von, für eine fehlerfreie Ausführung eines virtuellen Tests und/oder einer Simulation einer Fahrzeugvorrichtung und/oder einer Fahrzeugfunktion erforderlichen, zu einer mit einer spezifischen Version eines den virtuellen Test und/oder die Simulation ausführenden Algorithmus erstellten, insbesondere Test- und/oder Simulations-, Konfiguration kompatiblen Test- und/oder Simulationsdaten sind ebenso auf das System zum Bestimmen von, für eine fehlerfreie Ausführung eines virtuellen Tests und/oder einer Simulation einer Fahrzeugvorrichtung und/oder einer Fahrzeugfunktion erforderlichen, zu einer mit einer spezifischen Version eines den virtuellen Test und/oder die Simulation ausführenden Algorithmus erstellten, insbesondere Test- und/oder Simulations-, Konfiguration kompatiblen Test- und/oder Simulationsdaten und umgekehrt anwendbar.

### Kurze Beschreibung der Zeichnungen

Zum besseren Verständnis der vorliegenden Erfindung und ihrer Vorteile wird nun auf die nachfolgende Beschreibung in Verbindung mit den zugehörigen Zeichnungen verwiesen.

Nachfolgend wird die Erfindung anhand exemplarischer Ausführungsformen näher erläutert, die in den schematischen Abbildungen der Zeichnungen angegeben sind.

Es zeigen:

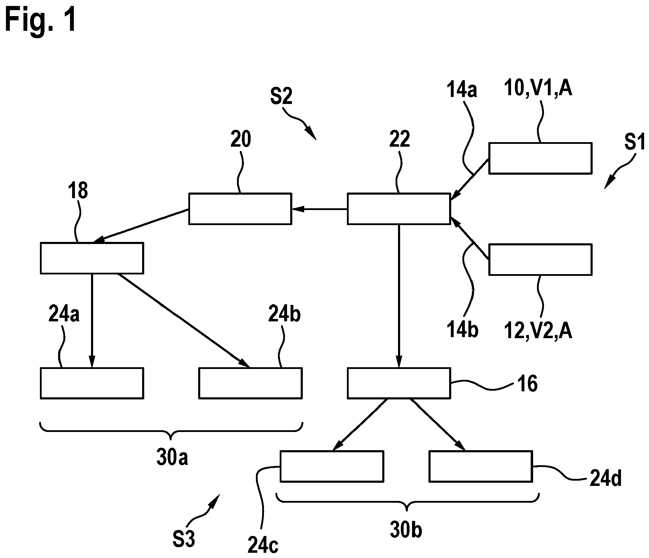

- Fig. 1: ein Ablaufdiagramm eines computerimplementierten Verfahrens zum Bestimmen von, für eine fehlerfreie Ausführung eines virtuellen Tests einer Fahrzeugvorrichtung und/oder einer Fahrzeugfunktion erforderlichen, zu einer mit einer spezifischen Version eines den virtuellen Test ausführenden Algorithmus erstellten, insbesondere Test-Konfiguration kompatiblen Testdaten gemäß einer ersten Ausführungsform der Erfindung; und

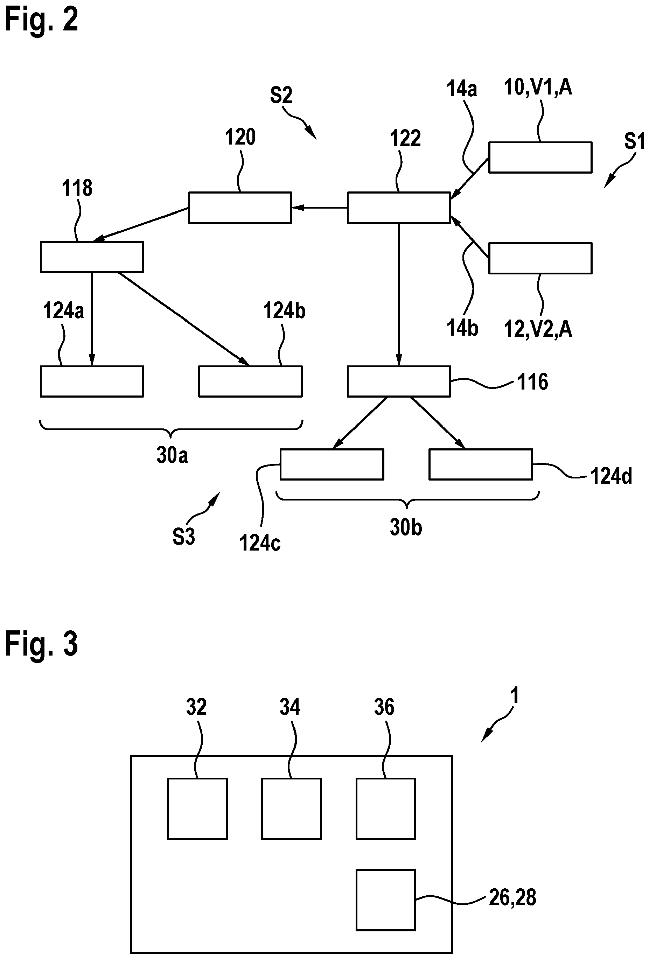

- Fig. 2: ein Ablaufdiagramm eines computerimplementierten Verfahrens zum Bestimmen von, für eine fehlerfreie Ausführung einer Simulation einer Fahrzeugvorrichtung und/oder einer Fahrzeugfunktion erforderlichen, zu einer mit einer spezifischen Version eines die Simulation ausführenden Algorithmus erstellten, insbesondere Simulations-Konfiguration kompatiblen Simulationsdaten gemäß einer zweiten Ausführungsform der Erfindung; und
- Fig. 3: eine schematische Darstellung eines Systems zum Bestimmen von, für eine fehlerfreie Ausführung eines virtuellen Tests und/oder einer Simulation einer Fahrzeugvorrichtung und/oder einer Fahrzeugfunktion erforderlichen, zu einer mit einer spezifischen Version eines den virtuellen Test und/oder die Simulation ausführenden Algorithmus erstellten, insbesondere Test- und/oder Simulations-, Konfiguration kompatiblen Test- und/oder Simulationsdaten gemäß der ersten und zweiten Ausführungsform der Erfindung.

Sofern nicht anders angegeben, bezeichnen gleiche Bezugszeichen gleiche Elemente der Zeichnungen.

### Ausführliche Beschreibung der Ausführungsformen

Das in Fig. 1 gezeigte Verfahren umfasst ein Bereitstellen S1 einer vorerfassten Selektion oder Selektieren einer, mit einer ersten Version V1 eines den virtuellen Test ausführenden Algorithmus A erstellten ersten, insbesondere Test-Konfiguration 10 und einer mit einer zweiten Version V2 eines den virtuellen Test ausführenden Algorithmus A erstellten zweiten, insbesondere Test-Konfiguration 12.

Des Weiteren umfasst das Verfahren ein Bestimmen S2 eines, eine Kompatibilitätsanforderung 14a, 14b der ersten Konfiguration 10 und/oder der zweiten Konfiguration 12 unterstützenden, Datensatzes D1, D2 von Testdaten 24a, 24b, 24c, 24d.

Das Verfahren umfasst darüber hinaus ein Ausgeben S3 des bestimmten, die Kompatibilitätsanforderung 14a, 14b der ersten Konfiguration 10 und/oder der zweiten Konfiguration 12 unterstützenden Datensatzes D1, D2 von Testdaten 24a, 24b, 24c, 24d.

Unter Verwendung des durch das erfindungsgemäße Verfahren bestimmten, eine Kompatibilitätsanforderung 14a, 14b der ersten Konfiguration 10 und/oder der zweiten Konfiguration 12 unterstützenden, Datensatzes D1, D2 von Testdaten 24a, 24b, 24c, 24d kann der virtuellen Test einer Fahrzeugvorrichtung und/oder einer Fahrzeugfunktion sodann ausgeführt werden.

Die, die Kompatibilitätsanforderung 14a, 14b der ersten Konfiguration 10 unterstützenden Testdaten 24a, 24b und die, die Kompatibilitätsanforderung 14a, 14b der zweiten Konfiguration 12 unterstützenden Testdaten 24c, 24d werden dabei durch eine selbe Instanz des den virtuellen Test ausführenden Algorithmus A ausgeführt.

Der virtuelle Test der Fahrzeugvorrichtung und/oder der Fahrzeugfunktion umfasst ein zu testendes System 16, eine Testumgebung, eine Testart, ein Testszenario 18, ein Testfahrzeug, einen Testfall 20, eine mit dem zu testenden System verbundene Sensorik und/oder eine Testsuite 22, welche von der ersten Konfiguration 10 und/oder der zweiten Konfiguration 12 unabhängig sind.

Ferner umfasst der virtuelle Test der Fahrzeugvorrichtung und/oder der Fahrzeugfunktion Testdaten 24c, 24d des zu testenden Systems 16, der Testumgebung, der Testart, des Testszenarios 18, des Testfahrzeugs, des Testfalls 20 und der mit dem zu testenden System verbundenen Sensorik, welche von der ersten Konfiguration 10 und/oder der zweiten Konfiguration 12 abhängig sind.

Die Kompatibilitätsanforderung 14a, 14b der ersten Konfiguration 10 sind zur Konfiguration kompatible erste Testdaten 24a, 24b. Des Weiteren sind die Kompatibilitätsanforderung 14a, 14b der zweiten Konfiguration 12 zur zweiten Konfiguration 12 kompatible zweite Testdaten 24c, 24d.

Die ersten Testdaten 24a, 24b sind mit einem die erste Version V1 des den virtuellen Test ausführenden Algorithmus A bezeichnenden ersten Kompatibilitätsattribut 30a annotiert. Des Weiteren sind die zweiten Testdaten 24c, 24d mit einem die zweite Version V2 des den virtuellen Test ausführenden Algorithmus A bezeichnenden zweiten Kompatibilitätsattribut 30b annotiert.

Der virtuelle Test ist ein Model-in-the-Loop-Test, ein Software-in-the-Loop-Test, ein Processor-in-the-Loop-Test oder ein Hardware-in-the-Loop-Test der Fahrzeugvorrichtung und/oder der Fahrzeugfunktion.

Die erste Konfiguration 10 und/oder die zweite Konfiguration 12 weisen eine Testsuite 22 und eine Testumgebung auf, welchen der die Kompatibilitätsanforderung 14a, 14b unterstützende Datensatz D1, D2 von Testdaten 24a, 24b, 24c, 24d zugewiesen wird.

Zum Ausführen einer Testart werden eine Testsuite 22 und ein Testfall 20 selektiert. Der Testart sind dabei jeweilige Testdaten 24a, 24b zugeordnet.

Die Testart des virtuellen Tests der Fahrzeugvorrichtung und/oder der Fahrzeugfunktion umfasst einen Szenario-basierten Test, einen Daten-Wiedergabe-Test und/oder einen Schritt-basierten Test.

Fig. 2 zeigt ein Ablaufdiagramm eines computerimplementierten Verfahrens zum Bestimmen von, für eine fehlerfreie Ausführung einer Simulation einer Fahrzeugvorrichtung und/oder einer Fahrzeugfunktion erforderlichen, zu einer mit einer spezifischen Version eines die Simulation ausführenden Algorithmus erstellten, insbesondere Simulations-Konfiguration kompatiblen Simulationsdaten gemäß einer zweiten Ausführungsform der Erfindung.

Darüber hinaus umfasst die Simulation der Fahrzeugvorrichtung und/oder der Fahrzeugfunktion Simulationsdaten 124a, 124b, 124c, 124d des zu simulierenden Systems, der Simulationsumgebung, der Simulationsart, des Simulationsszenarios 118, des Simulationsfahrzeugs 120 und der mit dem zu simulierenden System verbundenen Sensorik, welche von der ersten Konfiguration 10 und/oder der zweiten Konfiguration 12 abhängig sind.

Die Simulation simuliert ein Verhalten der Fahrzeugvorrichtung und/oder der Fahrzeugfunktion.

Die Simulation der Fahrzeugvorrichtung und/oder der Fahrzeugfunktion umfasst des Weiteren ein zu simulierendes System 116, eine Simulationsumgebung, eine Simulationsart, ein Simulationsszenario 118, ein Simulationsfahrzeug 120, eine mit dem zu simulierenden System verbundene Sensorik und eine Simulationssuite 122, welche unabhängig von der ersten Konfiguration 10 und/oder der zweiten Konfiguration 12 sind.

Die Kompatibilitätsanforderung 14a, 14b der ersten Konfiguration 10 sind unter Verwendung der ersten Version V1 des die Simulation ausführenden Algorithmus A erstellte Simulationsdaten 124a, 124b, 124c, 124d. Die Kompatibilitätsanforderung 14a, 14b der zweiten Konfiguration 12 sind ferner unter Verwendung der zweiten Version V2 des die Simulation ausführenden Algorithmus A erstellte Simulationsdaten 124a, 124b, 124c, 124d.

Fig. 3 zeigt eine schematische Darstellung eines Systems zum Bestimmen von, für eine fehlerfreie Ausführung eines virtuellen Tests und/oder einer Simulation einer Fahrzeugvorrichtung und/oder einer Fahrzeugfunktion erforderlichen, zu einer mit einer spezifischen Version eines den virtuellen Test und/oder die Simulation ausführenden Algorithmus A erstellten, insbesondere Test- und/oder Simulations-, Konfiguration kompatiblen Test- und/oder Simulationsdaten 124a, 124b, 124c, 124d gemäß der bevorzugten Ausführungsform der Erfindung.

Das System umfasst eine Bereitstellungseinheit, welche dazu eingerichtet ist, eine vorerfasste Selektion oder ein Selektieren einer, mit einer ersten Version V1 eines den virtuellen Test und/oder die Simulation ausführenden Algorithmus A erstellten ersten, insbesondere Test- und/oder Simulations-, Konfiguration 10 und einer mit einer zweiten Version V2 eines den virtuellen Test und/oder die Simulation ausführenden Algorithmus A erstellten zweiten, insbesondere Test- und/oder Simulations-, Konfiguration 12 bereitzustellen.

Des Weiteren umfasst das System eine Berechnungseinheit, welche dazu eingerichtet ist, ein, eine Kompatibilitätsanforderung 14a, 14b der ersten Konfiguration 10 und/oder der zweiten Konfiguration 12 unterstützenden, Datensatz D1, D2 von Test- und/oder Simulationsdaten 24a, 24b, 24c, 24d; 124a, 124b, 124c, 124d zu bestimmen.

Das System umfasst ferner eine Ausgabeeinheit, welche dazu eingerichtet ist, den bestimmten, die Kompatibilitätsanforderung 14a, 14b der ersten Konfiguration 10 und/oder der zweiten Konfiguration 12 unterstützenden Datensatz D1, D2 von Test- und/oder Simulationsdaten 24a, 24b, 24c, 24d; 124a, 124b, 124c, 124d auszugeben.

In einem Datenspeicher 26 gespeicherte Metadaten 28 kategorisieren, für welche zu testende Systeme, Testumgebungen, Testarten, Testszenarien, Testfahrzeuge, Testfälle 20, mit dem zu testenden System verbundene Sensorik und/oder Testsuiten 22 Testdaten 24a, 24b, 24c, 24d vorliegen. Ferner kategorisieren die im Datenspeicher 26 gespeicherte Metadaten 28, für welche zu simulierenden Systeme, Simulationsumgebungen, Simulationsarten, Simulationsszenarien 118, Simulationsfahrzeuge 120 und mit dem zu simulierenden System verbundene Sensorik, Simulationsdaten 124a, 124b, 124c, 124d vorliegen. Obwohl hierin spezifische Ausführungsformen illustriert und beschrieben wurden, ist es dem Fachmann verständlich, dass eine Vielzahl von alternativen und/oder äquivalenten Implementierungen existieren. Es sollte beachtet werden, dass die beispielhafte Ausführungsform oder beispielhaften Ausführungsformen nur Beispiele sind und nicht dazu dienen, den Umfang, die Anwendbarkeit oder die Konfiguration in irgendeiner Weise einzuschränken.

Vielmehr liefert die vorstehend genannte Zusammenfassung und ausführliche Beschreibung dem Fachmann eine bequeme Anleitung zur Implementierung zumindest einer beispielhaften Ausführungsform, wobei verständlich ist, dass verschiedene Änderungen im Funktionsumfang und der Anordnung der Elemente vorgenommen werden können, ohne vom Umfang der beigefügten Ansprüche und ihrer rechtlichen Äquivalente abzuweichen.

Im Allgemeinen beabsichtigt diese Anmeldung, Änderungen bzw. Anpassungen oder Variationen der hierin dargestellten Ausführungsformen abzudecken. Beispielsweise kann eine Reihenfolge der Verfahrensschritte abgeändert werden. Das Verfahren kann ferner zumindest abschnittsweise sequentiell oder parallel durchgeführt werden.

### Bezugszeichenliste

- 1: System
- 10: erste Konfiguration
- 12: zweite Konfiguration
- 14a: erste Kompatibilitätsanforderung
- 14b: zweite Kompatibilitätsanforderung
- 16: zu testendes System
- 18: Testszenario
- 20: Testfall
- 22: Testsuite
- 24a, 24b: Testdaten
- 24c, 24d: Testdaten
- 26: Datenspeicher
- 28: Metadaten
- 30a: erstes Kompatibilitätsattribut
- 30b: zweites Kompatibilitätsattribut
- 32: Bereitstellungseinheit
- 34: Berechnungseinheit
- 36: Ausgabeeinheit
- 116: zu simulierendes System
- 118: Simulationsszenario
- 120: Simulationsfahrzeug
- 122: Simulationssuite
- 124a, 124b: Simulationsdaten
- 124c, 124d: Simulationsdaten
- A: Algorithmus
- S1 - S3: Verfahrensschritte
- V1: erste Version des Algorithmus
- V2: zweite Version des Algorithmus

## Patentansprüche

1. Computer-implementiertes Verfahren zum Bestimmen von, für eine fehlerfreie Ausführung eines virtuellen Tests und/oder einer Simulation einer Fahrzeugvorrichtung und/oder einer Fahrzeugfunktion erforderlichen, zu einer mit einer spezifischen Version eines den virtuellen Test und/oder die Simulation ausführenden Algorithmus (A) erstellten, insbesondere Test- und/oder Simulations-, Konfiguration kompatiblen Test- und/oder Simulationsdaten (24a, 24b, 24c, 24d; 124a, 124b, 124c, 124d), mit den Schritten:
Bereitstellen (S1) einer vorerfassten Selektion oder Selektieren einer, mit einer ersten Version (V1) eines den virtuellen Test und/oder die Simulation ausführenden Algorithmus (A) erstellten ersten, insbesondere Test- und/oder Simulations-, Konfiguration (10) und einer mit einer zweiten Version (V2) eines den virtuellen Test und/oder die Simulation ausführenden Algorithmus (A) erstellten zweiten, insbesondere Test- und/oder Simulations-, Konfiguration (12);
Bestimmen (S2) eines, eine Kompatibilitätsanforderung (14a, 14b) der ersten Konfiguration (10) und/oder der zweiten Konfiguration (12) unterstützenden, Datensatzes (D1, D2) von Test- und/oder Simulationsdaten (24a, 24b, 24c, 24d; 124a, 124b, 124c, 124d); und
Ausgeben (S3) des bestimmten, die Kompatibilitätsanforderung (14a, 14b) der ersten Konfiguration (10) und/oder der zweiten Konfiguration (12) unterstützenden Datensatzes (D1, D2) von Test- und/oder Simulationsdaten (24a, 24b, 24c, 24d; 124a, 124b, 124c, 124d).

2. Computer-implementiertes Verfahren nach Anspruch 1, wobei der virtuelle Test der Fahrzeugvorrichtung und/oder der Fahrzeugfunktion ein zu testendes System (16), eine Testumgebung, eine Testart, ein Testszenario (18), ein Testfahrzeug, einen Testfall (20), eine mit dem zu testenden System verbundene Sensorik und/oder eine Testsuite (22) umfasst, welche von der ersten Konfiguration (10) und/oder der zweiten Konfiguration (12) unabhängig sind, und wobei der virtuelle Test der Fahrzeugvorrichtung und/oder der Fahrzeugfunktion Testdaten (24a, 24b, 24c, 24d) des zu testenden Systems (16), der Testumgebung, der Testart, des Testszenarios (18), des Testfahrzeugs, des Testfalls (20), und der mit dem zu testenden System verbundenen Sensorik umfasst, welche von der ersten Konfiguration (10) und/oder der zweiten Konfiguration (12) abhängig sind.

3. Computer-implementiertes Verfahren nach Anspruch 1 oder 2, wobei die Simulation der Fahrzeugvorrichtung und/oder der Fahrzeugfunktion ein zu simulierendes System (116), eine Simulationsumgebung, eine Simulationsart, ein Simulationsszenario (118), ein Simulationsfahrzeug (120), eine mit dem zu simulierenden System verbundene Sensorik und eine Simulationssuite (122) umfasst, welche unabhängig von der ersten Konfiguration (10) und/oder der zweiten Konfiguration (12) sind, und wobei die Simulation der Fahrzeugvorrichtung und/oder der Fahrzeugfunktion Simulationsdaten (124a, 124b, 124c, 124d) des zu simulierenden Systems, der Simulationsumgebung, der Simulationsart, des Simulationsszenarios (118), des Simulationsfahrzeugs (120) und der mit dem zu simulierenden System verbundenen Sensorik umfasst, welche von der ersten Konfiguration (10) und/oder der zweiten Konfiguration (12) abhängig sind.

4. Computer-implementiertes Verfahren nach Anspruch 2, wobei in einem Datenspeicher (26) gespeicherte Metadaten (28) kategorisieren, für welche zu testende Systeme, Testumgebungen, Testarten, Testszenarien, Testfahrzeuge, Testfälle (20), mit dem zu testenden System verbundene Sensorik und/oder Testsuiten (22) Testdaten (24a, 24b, 24c, 24d) vorliegen.

5. Computer-implementiertes Verfahren nach einem der vorhergehenden Ansprüche, wobei die Kompatibilitätsanforderung (14a, 14b) der ersten Konfiguration (10) unter Verwendung der ersten Version (V1) des den virtuellen Test ausführenden Algorithmus (A) erstellte Test- und/oder Simulationsdaten (24a, 24b, 24c, 24d; 124a, 124b, 124c, 124d) sind, und wobei die Kompatibilitätsanforderung (14a, 14b) der zweiten Konfiguration (12) unter Verwendung der zweiten Version (V2) des den virtuellen Test ausführenden Algorithmus (A) erstellte Test- und/oder Simulationsdaten (24a, 24b, 24c, 24d; 124a, 124b, 124c, 124d) sind.

6. Computer-implementiertes Verfahren nach einem der vorhergehenden Ansprüche, wobei die Kompatibilitätsanforderung (14a, 14b) der ersten Konfiguration (10) zur Konfiguration kompatible erste Test- und/oder Simulationsdaten (24a, 24b, 24c, 24d; 124a, 124b, 124c, 124d) sind, und wobei die Kompatibilitätsanforderung (14a, 14b) der zweiten Konfiguration (12) zur zweiten Konfiguration (12) kompatible zweite Test- und/oder Simulationsdaten (24a, 24b, 24c, 24d; 124a, 124b, 124c, 124d) sind.

7. Computer-implementiertes Verfahren nach Anspruch 5, wobei die ersten Test- und/oder Simulationsdaten (24a, 24b, 24c, 24d; 124a, 124b, 124c, 124d) mit einem die erste Version (V1) des den virtuellen Test ausführenden Algorithmus (A) bezeichnenden ersten Kompatibilitätsattribut (30a) annotiert sind, und wobei die zweiten Test- und/oder Simulationsdaten (24a, 24b, 24c, 24d; 124a, 124b, 124c, 124d) mit einem die zweite Version (V2) des den virtuellen Test ausführenden Algorithmus (A) bezeichnenden zweiten Kompatibilitätsattribut (30b) annotiert sind.

8. Computer-implementiertes Verfahren nach einem der vorhergehenden Ansprüche, wobei der virtuelle Test ein Model-in-the-Loop-Test, ein Software-in-the-Loop-Test, ein Processor-in-the-Loop-Test oder ein Hardware-in-the-Loop-Test der Fahrzeugvorrichtung und/oder der Fahrzeugfunktion ist, und wobei die Simulation ein Verhalten der Fahrzeugvorrichtung und/oder der Fahrzeugfunktion simuliert.

9. Computer-implementiertes Verfahren nach einem der vorhergehenden Ansprüche, wobei die erste Konfiguration (10) und/oder die zweite Konfiguration (12) eine Testsuite (22) und eine Testumgebung aufweisen, welchen der die Kompatibilitätsanforderung (14a, 14b) unterstützende Datensatz (D1, D2) von Test- und/oder Simulationsdaten (24a, 24b, 24c, 24d; 124a, 124b, 124c, 124d) zugewiesen wird.

10. Computer-implementiertes Verfahren nach einem der vorhergehenden Ansprüche, wobei zum Ausführen einer Testart eine Testsuite (22) und ein Testfall (20) selektiert werden, wobei der Testart jeweilige Testdaten (24a, 24b, 24c, 24d) zugeordnet sind.

11. Computer-implementiertes Verfahren nach Anspruch 2, wobei die Testart des virtuellen Tests der Fahrzeugvorrichtung und/oder der Fahrzeugfunktion einen Szenario-basierten Test, einen Daten-Wiedergabe-Test und/oder einen Schritt-basierten Test umfasst.

12. Computer-implementiertes Verfahren zum Ausführen eines virtuellen Tests und/oder einer Simulation einer Fahrzeugvorrichtung und/oder einer Fahrzeugfunktion unter Verwendung eines, durch das Verfahren nach einem der Ansprüche 1 bis 11 bestimmten, eine Kompatibilitätsanforderung (14a, 14b) der ersten Konfiguration (10) und/oder der zweiten Konfiguration (12) unterstützenden, Datensatzes (D1, D2) von Test- und/oder Simulationsdaten (24a, 24b, 24c, 24d; 124a, 124b, 124c, 124d).

13. Computer-implementiertes Verfahren nach Anspruch 12, wobei die, die Kompatibilitätsanforderung (14a, 14b) der ersten Konfiguration (10) unterstützenden Test- und/oder Simulationsdaten (24a, 24b, 24c, 24d; 124a, 124b, 124c, 124d) und die, die Kompatibilitätsanforderung (14a, 14b) der zweiten Konfiguration (12) unterstützenden Test- und/oder Simulationsdaten (24a, 24b, 24c, 24d; 124a, 124b, 124c, 124d) durch eine selbe Instanz des den virtuellen Test ausführenden Algorithmus (A) ausgeführt werden.

14. System (1) zum Bestimmen von, für eine fehlerfreie Ausführung eines virtuellen Tests und/oder einer Simulation einer Fahrzeugvorrichtung und/oder einer Fahrzeugfunktion erforderlichen, zu einer mit einer spezifischen Version eines den virtuellen Test und/oder die Simulation ausführenden Algorithmus (A) erstellten, insbesondere Test- und/oder Simulations-, Konfiguration kompatiblen Test- und/oder Simulationsdaten (24a, 24b, 24c, 24d; 124a, 124b, 124c, 124d), umfassend:
einer Bereitstellungseinheit (32), welche dazu eingerichtet ist, eine vorerfasste Selektion oder ein Selektieren einer, mit einer ersten Version (V1) eines den virtuellen Test und/oder die Simulation ausführenden Algorithmus (A) erstellten ersten, insbesondere Test- und/oder Simulations-, Konfiguration (10) und einer mit einer zweiten Version (V2) eines den virtuellen Test und/oder die Simulation ausführenden Algorithmus (A) erstellten zweiten, insbesondere Test- und/oder Simulations-, Konfiguration (12) bereitzustellen;
einer Berechnungseinheit (34), welche dazu eingerichtet ist, ein, eine Kompatibilitätsanforderung (14a, 14b) der ersten Konfiguration (10) und/oder der zweiten Konfiguration (12) unterstützenden, Datensatz (D1, D2) von Test- und/oder Simulationsdaten (24a, 24b, 24c, 24d; 124a, 124b, 124c, 124d) zu bestimmen; und
einer Ausgabeeinheit (36), welche dazu eingerichtet ist, den bestimmten, die Kompatibilitätsanforderung (14a, 14b) der ersten Konfiguration (10) und/oder der zweiten Konfiguration (12) unterstützenden Datensatz (D1, D2) von Test- und/oder Simulationsdaten (24a, 24b, 24c, 24d; 124a, 124b, 124c, 124d) auszugeben.

15. Computerprogramm mit Programmcode, um ein Verfahren zum Ausführen eines virtuellen Tests einer Vorrichtung und/oder Fahrfunktion zur zumindest teilweisen autonomen Führung eines Kraftfahrzeugs nach einem der Ansprüche 1 bis 11 auszuführen, wenn das Computerprogramm auf einem Computer ausgeführt wird.
